# EUROPÄISCHE PATENTANMELDUNG

(11) **EP 0 533 616 A2**
(43) Veröffentlichungstag der Anmeldung: **24.03.1993**
(21) Anmeldenummer: 92810579.0
(22) Anmeldetag: 29.07.1992
(51) Int. Cl.: F16K 15/20

(54) **Automatisch schliessendes Ventil an einem aufblasbaren Körper**

(30) Priorität: 19.09.1991 CH 2773/91
(71) Anmelder: Peter, Arthur Max, Ch-8157 Dielsdorf (CH)
(72) Erfinder: Peter, Arthur Max, Ch-8157 Dielsdorf (CH)
(74) Vertreter: Feldmann, Clarence Paul

(57) **Zusammenfassung**

Das Ventil hat eine zylindrische Aufblastülle (1), welche im unteren Bereich eine kegelförmige Wandpartie (10) aufweist, an der der Anschweissrand (2) anschliesst. Der Anschweissrand (2) wird über eine Verbindungsstelle (4) mit der Folie (5) des aufblasbaren Körpers verbunden. Unten auf dem Anschweissrand (2) ist eine Andrückmembran (3) an der Stelle (6) umlaufend angeschweisst und lässt lediglich eine Luftdurchtrittsöffnung frei. Die so gebildete ringförmige Fläche (8) ist die aktive Anpressfläche, mit der die Andrückmembran (3) auf den Anschweissrand (2) presst. Unterhalb dem kegelförmigen Randbereich (10) ist eine Ausnehmung in der Andrückmembran (3) angebracht, welche von einer topfförmigen Aufnahme (11) dichtend abgeschlossen ist. So lässt sich die Aufblastülle (1) mit dem kegelförmigen Randbereich (10) in die Aufnahme (11) drücken.

## Beschreibung

Die vorliegende Erfindung betrifft ein automatisch schliessendes Ventil mit einer zylindrischen Aufblastülle mit einem peripher abstehenden Schweissrand zur Verschweissung mit jener Folie eines aufblasbaren Körpers, die von der Aufblastülle durchsetzt wird.
Seit etlichen Jahren sind automatisch schliessende Ventile, der eingangs genannten Art auf dem Markt bekannt. Der automatische Schliesseffekt wird dabei durch ein auf das Ende der Aufblastülle schwenkbar angeordnetes Deckelchen bewirkt. Dieses Deckelchen, welches der Aufblasseite der Aufblastülle gegenüberliegt und einstückig mit der Aufblastülle gefertigt ist, wird durch den sich aufbauenden Innendruck im aufblasbaren Körper auf die Aufblastülle gepresst. Die Anpresskraft, die dabei auf dem Deckelchen wirksam ist, ist sehr gering, da die wirksame Andruckfläche lediglich der offenen Querschnittsfläche der Aufblastülle entspricht. Ist der Innendruck des aufblasbaren Körpers nicht wirklich erheblich, so ist der Dichteffekt eines solchen Ventiles völlig ungenügend. Gerade bei aufblasbaren Körpern, wie Luftmatratzen, Wasserbälle, Schwimmhilfen und dergleichen, die oftmals mit dem Mund aufgeblasen werden, ist der herrschende Innendruck relativ gering. Konsequenterweise genehmigen die Zulassungsbehörden verschiedener Länder solche Ventile allein nicht. Folglich haben die Hersteller solcher Ventile diese zusätzlich mit einem in die Aufblastülle einführbaren Stopfen versehen. Wird nun die Aufblastülle mit dem Stopfen geschlossen, so besteht kein Druckunterschied auf beiden Seiten des Deckelchens und dessen Schliesswirkung fällt dahin. Lediglich wenn auf den aufblasbaren Körper ein Druck ausgeübt wird, der den Innendruck erhöht, so wird auch das Deckelchen wiederum auf die Aufblastülle gepresst. Folglich wird der Druck auf den Stopfen reduziert. Somit wirkt das Deckelchen lediglich als Schutz um einen erhöhten Druck auf den Stopfen zu vermeiden.

Aus der US-A-4′674′532 ist ein automatisch schliessendes Ventil für aufblasbare Körper bekannt, welches vollständig aus Folie gefertigt ist. Zwischen zwei flachen Folien, die die Folie des aufblasbaren Körpers senkrecht durchsetzen, ist ein sackartiges Gebilde eingeschweisst, welches zur Innenseite des aufblasbaren Körpers hin offen ist. Durch den herrschenden Innendruck im aufblasbaren Körper soll dieses sackartige Gebilde aufgeblasen werden und somit den freien Querschnitt zwischen den beide Folienstreifen, die entlang ihrer Längsseite zusammengeschweisst sind, verstopfen und abdichten. Auch die hier wirksamen Kräfte sind sehr gering und der Dichteffekt daher minimal.

Es ist daher die Aufgabe der vorliegenden Erfindung, ein automatisch schliessendes Ventil der eingangs genannten Art derart zu verbessern, dass die vorgenannten Nachteile behoben werden.

Es ist eine weitere Aufgabe der vorliegenden Erfindung möglichst weitgehend von den gebräuchlichen auf dem Markt erhältlichen Ventilen mit einer standardisierten Aufblastülle zu verwenden.

Die erste Aufgabe löst ein automatisch schliessendes Ventil mit den Merkmalen des Patentanspruches 1.

Die weitere Aufgabe löst ein Ventil mit den Merkmalen des Patentanspruches 4. Weitere vorteilhafte Ausgestaltungsformen des erfindungsgemässen Ventiles gehen aus den abhängigen Ansprüchen hervor und deren Bedeutung und Wirkungsweise ist in der anschliessenden Beschreibung anhand der beiliegenden Zeichnungen erläutert.
Es zeigt:
Figur 1 eine Aufsicht auf ein Ausführungsbeispiel des erfindungsgemässen Ventiles von unten und
Figur 2 dieselbe Ausführung im Schnitt entlang der Linie A-A in Figur 1;
Figur 3 eine Variante der Ausführung gemäss Figur 1 in derselben Darstellungsweise;
Figur 4 eine weitere Ausführungsform des Ventils mit einstülpbarer Aufblastülle in der Aufblaslage im Schnitt und
Figur 5 dieselbe Ausführung in geschlossenem Zustand mit eingestülpter Aufblastülle.
Figur 6 eine Ausführung zur Nachrüstung bestehender Ventile, die aus zwei gesonderten Membrane besteht in der Sicht von unten und
Figur 7 im Schnitt dargestellt, sowie
Figur 8 eine kombinierte Variante abgeleitet aus den Ausführungen gemäss den Figuren 4-7, wiederum im Schnitt.
Figur 9 eine weiterentwickelte Variante mit statischer und dynamischer Dichtfunktion im Schnitt und schliesslich
Figur 10 nochmals ein Ventil als Nachrüstausführung wiederum im Schnitt dargestellt.

Der prinzipielle Aufbau des erfindungsgemässen automatisch schliessenden Ventils ist ausserordentlich einfach. Es besteht aus einer zylindrischen Aufblastülle 1 und einem daran anschliessenden peripher abstehenden Anschweissrand 2. Die Aufblastülle steht somit senkrecht auf die vom Anschweissrand 2 gebildete Fläche. Das Wort zylindrisch im Zusammenhang mit der Aufblastülle 1 bedeutet hierbei nicht, dass deren Querschnittsform eine besondere, vor allem nicht blos eine kreisförmige Querschnittsfläche aufweisen soll, sondern dient insbesondere zur Abgrenzung gegenüber Ventilen, die eine aus Folien gefertigte in der Normallage vollständig flache Aufblastülle aufweisen. Von der Aufblasseite her gesehen,ist unten auf den Anschweissrand 2, zum Innern des aufblasbaren Körper gerichtet, eine flache Andrückmembran aufgebracht. Die Andrückmembran 3 ist nur geringfügig kleiner, als der Anschweissrand 2 des Ventils. Die Andrückmembran 3 ist zentrisch auf den Anschweissrand angeordnet. Die Verbindung zwischen dem Anschweissrand 2 und der Andrückmembran 3 erfolgt über eine linienförmige Verbindungsstelle 6. Diese linienförmige Verbindungsstelle ist annähernd vollständig umlaufend und lässt lediglich eine Luftdurchtrittsöffnung 7 frei. Die gesamte, innerhalb der linienförmige Verbindungsstelle 6 liegende Fläche 8 bildet die aktive Anpressfläche. Inaktiv ist lediglich eine kleine Fläche entsprechend der Querschnittfläche der Aufblastülle 1. Die aktive Anpressfläche bildet somit die relativ grosse ringförmige Fläche 8. Die Hauptaufgabe des Anschweissrandes 2 besteht vor allem darin, eine Verbindung mit der Folie 5 des aufblasbaren Körpers zu bilden. Die Folie des aufblasbaren Körpers kann sowohl oben, wie auch unten an den Anschweissrand 2 anliegen. Die Verbindung zwischen der Folie 5 des aufblasbaren Körpers und dem Anschweissrand 2 erfolgt wiederum über eine schmale, annähernd linienförmig Verbindungsstelle 4. Beide linienförmige Verbindungsstellen 4,6, als die einerseits zwischen der Folie 5 des aufblasbaren Körpers und dem Anschweissrand 2 und andererseits zwischen dem Anschweissrand 2 und der Andrückmembran 3 liegen, werden vorzugsweise als Schweissnaht realisiert. Es ist jedoch nicht ausgeschlossen, die eine oder andere oder beide linienförmigen Verbindungsstellen 4,6 eine Verklebung zu realisieren.
Die Wirkungsweise des erfindungsgemässen Ventils beruht darauf, dass im aufgeblasenen Zustand des aufblasbaren Körpers der Innendruck P_{I} grösser, als der Aussendruck P_{A} ist. Die Kraft, mit der die Andrückmembran, auf die über ihr liegende Fläche des Anschweissrandes 2 drückt, ist einerseits von der Druckdifferenz zwischen P_{A} und P_{I}, sowie andererseits von der Grösse der aktiven Anpressfläche F_{A} abhängig. Die erfindungsgemässe Konstruktion erhöht im wesentlichen die Grösse der aktiven Anpressfläche F_{A}.

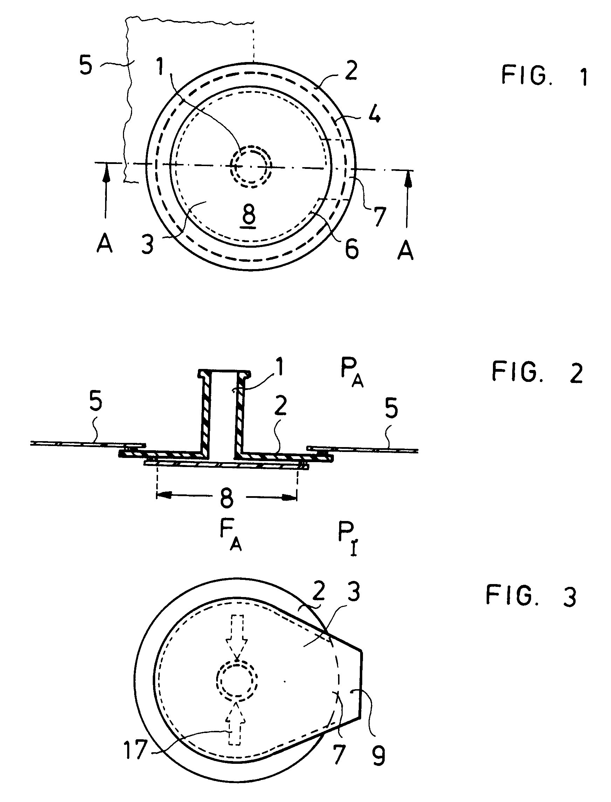

Bei der eben beschriebenen Ausführungsform haben der Anschweissrand 2 und die Andrückmembran 3 dieselbe Form. Entsprechend laufen die linienförmigen Verbindungsstellen 4 und 6 konzentrisch zueinander, mit Ausnahme in jenem Bereich, in dem die Luftdurchtrittsöffnung 7 angebracht ist. In Abwandlung zu jenem Ausführungsbeispiel ist in der Figur 3 eine Variante dargestellt, bei der die Grundfläche der Andrückmembran anderst gestaltet ist, als die Grundfläche des Anschweissrandes 2. Hier hat die Andrückmembran 3 eine mindestens annähernd U-förmige Grundfläche. Im verbundenen Zustand der Andrückmembran 3 mit dem Anschweissrand 2 überlappt die Andrückmembran 3 den Anschweissrand einseitig. Im Bereich, in dem Andrückmembran 3 über den Anschweissrand 2 hinausragt, ist die Luftdurchtrittsöffnung 7 angebracht. Der den Anschweissrand 2 überragende Teil der U-förmigen Andrückmembran 3 bildet so eine Art Lappen 9. Will man die im aufblasbaren Körper befindliche Luft hieraus wieder entströmen lassen, so muss sichergestellt werden, dass die Folie, aus der die Andrückmembran 3 gefertigt ist, gegenüber dem Anschweissrand 2 sich abhebt. Zu diesem Zweck drückt man auf zwei verschiedenen Seiten der Aufblastülle 1 das Ventil gleichzeitig zusammen, wodurch der Anschweissrand 2 nach oben und die Andrückmembran 3 nach unten gewölbt wird. Dieser Effekt wird durch die Ausgestaltungsform gemäss der Figur 3 verbessert. Es ist selbstverständlich darauf zu achten, dass man nicht auf jene Seite des Ventiles drückt, auf der die Luftdurchtrittsöffnung 7 angebracht ist. Um dies zu vermeiden, ist es sinnvoll, auf der Oberfläche des Anschweissrandes 2 entsprechende Markierungen anzubringen, welche die korrekte Zusammendrückrichtung aufzeigen. Da diese Markierungen 17 in der Darstellung gemäss Figur 3 auf der der Zeichnungsebene abgelegenen Seite angebracht sind, sind diese lediglich strichliniert eingetragen.

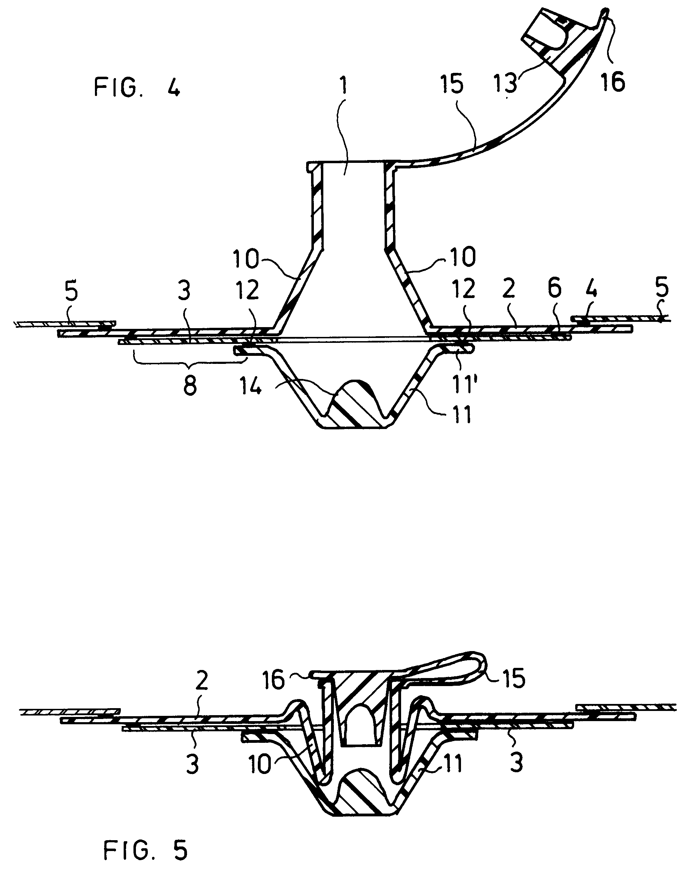

Die Behörden verschiedener Länder erlauben die alleinige Verwendung automatisch schliessender Ventile nicht und verlangen zusätzliche Sicherheitsmassnahmen. Eine solche Sicherheitsmassnahme besteht in der zwingenden Anwendung eines Stopfens, der in die Aufblastülle 1 eingeschoben wird. Diese Massnahme lässt sich beim erfindungsgemässen Ventil problemlos auch realisieren. Die stark vorstehenden Aufblastüllen bergen aber zusätzlich auch die Möglichkeit einer Verletzung und erhöhen auch die Gefahr eines unbeabsichtigten Herausziehens des Stopfens. Eine weitere Bedingung ist folglich, dass die Aufblastülle 1 in den aufblasbaren Körper mindestens teilweise hineinstülpbar sein soll. Diese Möglichkeit besteht bei der Ausführungsform gemäss den Figuren 1 bis 3 nicht. Hierzu sind Aenderungen erforderlich, wie sie die Ausführungsform gemäss den Figuren 4 und 5 zeigt. Der prinzipielle Aufbau des Ventils mit sämtlichen vorherbeschriebenen Wandlungen bleibt bestehend. Entsprechend sind auch alle gleichbleibenden Elemente mit denselben Bezugszahlen versehen. Neu ist hier, dass die Aufblastülle 1 im Bereich oberhalb des Anschweissrandes 2 mit einem kegelförmigen, flexiblen Randbereich 10 versehen ist. Durch Druck auf die Tülle 1 stülpt sich dieser kegelförmige, flexible Randbereich 10 nach innen und die Tülle 1 senkt sich mit seinem oberen Rand bis fast annähernd auf die Höhe der angrenzenden Folie 5 des aufblasbaren Körpers. Hierzu muss jedoch die Andrückmembran 3 im Bereich unterhalb der Aufblastülle 1 und des kegelförmigen Randbereiches 10 eine Ausnehmung aufweisen, dessen Rand mit dem Rand 11′ einer topfförmigen Aufnahme 11 rundum dichtend verschweisst ist. In diese topfförmige Aufnahme 11 findet nun die Tülle 1 zusammen mit dem umgestülpten, kegelförmigen, flexiblen Randbereich 10 Platz. Die ringförmige Fläche 8, welche die aktive Anpressfläche bildet, umgibt somit die topfförmige Aufnahme 11. Die topfförmige Aufnahme 11 kann auf ihrem Boden zusätzlich einen nach oben gerichteten Zapfen 14 haben, der im eingedrückten Zustand der Aufblastülle 1 exakt in diesen hineinpasst. Vorzugsweise bringt man den oberen Rand der Aufblastülle 1 über ein angespritzes Band 15 den einstückig damit verbundenen Stopfen 13 an. Schliesst man die Aufblastülle 1, in dem man den Stopfen 13 in die Aufblastülle einpresst, so genügt meistens bereits dieser Druck um die Aufblastülle insgesamt nach unten zu verschieben und die kegelförmige flexible Wand 10 umzustülpen. Beim Oeffnen zieht man an einer Aufziehlasche 16, welche im geschlossenen Zustand des Ventiles die Aufblastülle 1 überragt, wobei man einerseits zuerst die Aufblastülle 1 aus seiner vertieften Lage nach oben zieht und nach Ueberwindung der entsprechenden Reibungskräfte den Stopfen 13 aus der Tülle herauszieht.

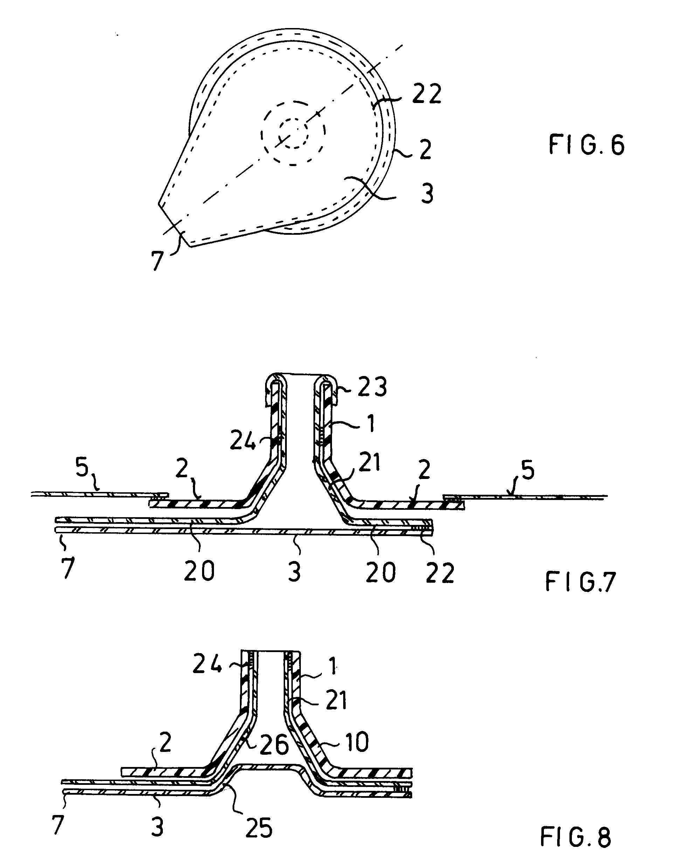

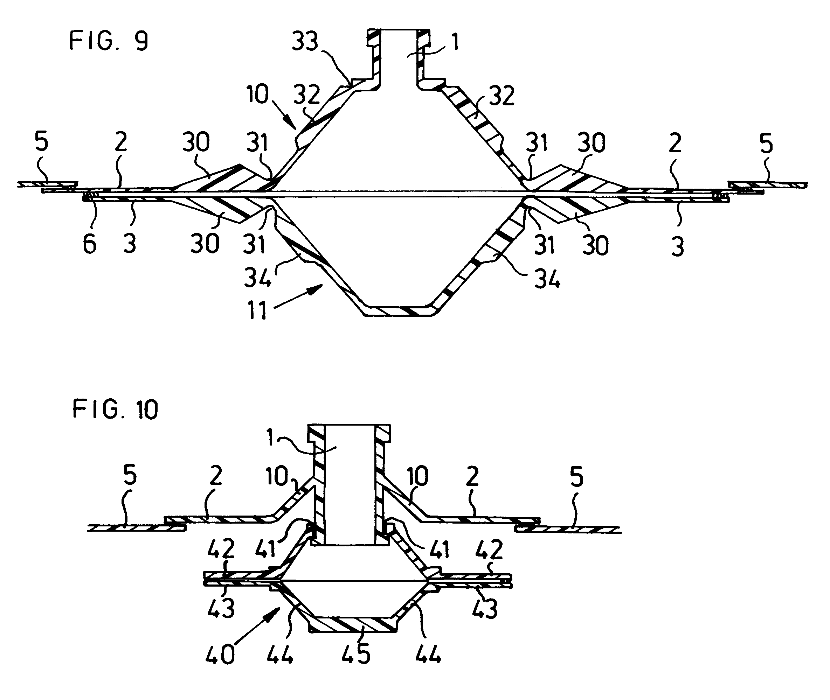

Der prinzipielle Aufbau des erfindungsgemässen Ventiles besteht aus zwei Membrane, die in einem bestand um die die Aufblastülle herum miteinander verschweisst sind. Die obere der beiden Membrane steht mit einer Aufblastülle des aufblasbaren Körpers in Verbindung. Bei den Ausführungen gemäss den Figuren 1 bis 5 wird hierbei gleichzeitig Gebrauch von der bereits vorhandenen Aufblastülle an einem aufblasbaren Körper gemacht. Nun kann aber, wie die nachfolgenden Ausführungsbeispiele gemäss den Figuren 6 bis 8 zeigen, dass das automatisch schliessende Ventil auch unabhängig von der bereits vorhandenen Aufblastülle 1 nachträglich angebracht werden. In diesem Fall wird nicht vom Anschweissrand 2 Gebrauch gemacht. Daher wird in einem solchen Fall die obere Membran 20 konkret realisiert. Die obere Membran 20 ist dann mit einer eigenen Tülle 21 versehen, die in die vorhandene Aufblastülle 1 des aufblasbaren Körpers eingeschoben wird. Eine direkte Verbindung zwischen der oberen Membran 20 und dem Anschweissrand 3 der vorhandenen Aufblastülle 1 ist dann nicht vorhanden. Die Formgestaltung der oberen Membran 20 und der Andrückmembran 3 ist dann unabhängig von der Grösse und Form des Anschweissrandes 2. Folglich entfällt auch die Verbindungsstelle 4 zwischen der Andrückmembran 3 und dem Anschweissrand 2. Statt dessen wird dann eine Verbindungsstelle 22 zwischen der oberen Membran 20 und der Andrückmembran 3 nötig. Selbstverständlich kann auch hier wieder die Luftdurchtrittsöffnung 7 exzentrisch angebracht sein. Der Vorteil einer derartigen Variante besteht insbesondere darin, dass man in der Materialwahl für das automatisch schliessende Ventil vollkommen frei ist und nicht auf Materialbedingungen, der bereits vorhandenen Aufblastülle 1, Rücksicht zu nehmen braucht. Die in die vorhandene Aufblastülle 1 einschiebbare Tülle 21 kann somit auch aus einem flexiblen Folienmaterial gefertigt sein, und wie dies Figur 7 zeigt, einen verlängerten, zylindrischen Teil 23 haben, der sich oben umstülpen lässt und so die Aufblastülle 1 sowohl von aussen, wie von innen ummantelt. Ueblicherweise sind heute Aufblastüllen aus einem Kunststoff gefertigt, der PVC enthält. Eine wünschbare Bedingung, die bisher allerdings noch nicht realisiert werden konnte, besteht darin, dass man den Mundkontakt mit PVC oder PVC-haltigen Kunststoffen vermeiden will. Dank der hier vorgeschlagenen Lösung ist diese Forderung problemlos zu erfüllen. Allerdings wird in den meisten Fällen die Verbindung zwischen der Aufblastülle 1 und der eingeschobenen Tülle 21 allein durch Formschluss nicht genügen. Auch dann nicht, wenn der verlängerte, zylindrische Teil 23 der Tülle 21 über die Aufblastülle 1 gestülpt ist. Daher wird vorgeschlagen, die einsteckbare Tülle 21 mit der Aufblastülle 1 mittels einer ring-förmigen Verschweissung 24 im zylindrischen Teil beider Tüllen zu bewerkstelligen. Es ist aber auch möglich, über die Umstülpung einen Klemmring zur mechanischen Verbindung zu schieben.
Die freie Wahl der Materialien erlaubt es auch, die Andrückmembran aus einer verformbaren Folie, zum Beispiel eine tiefziehbare Folie, herzustellen. In diesem Fall lässt sich in die Andrückmembran 3 eine kegelstumpfförmige Erhebung 25 einformen, die genau angepasst an einem konischen Randbereich 26 der oberen Membran 20 ist. Dieser konisch Randbereich 26 der oberen Membran muss dann selbstverständlich formlich mit der entsprechenden Formgebung des Randbereiches 10 der Aufblastülle 1 übereinstimmen. In einem solchen Fall drückt somit der Innendruck im aufblasbaren Körper die kegelstumpfförmige Erhebung 25 der Andrückmembran 3 in den entsprechenden konischen Randbereich 26 der oberen Membran 20. Ein seitlicher Druck auf das Ventil, wie er ansonsten genügt, das Ventil zu öffnen und den aufblasbaren Körper zu entleeren, hat nun keine Wirkung mehr. Hierzu muss erst die kegelstumpfförmige Erhebung 25 aus dem konischen Randbereich 26 der oberen Membran geschoben werden. Dies kann beispielsweise mittels einem von oben in die Tülle eingeschobenen Stift erfolgen. Eine andere Möglichkeit besteht beispielsweise darin, dass man zuerst in die Aufblastülle 1 hineinbläst bis sich die beiden konischen Teile zueinander verschoben haben und danach das Ventil, wie vorher beschrieben, seitlich zusammendrückt.
Selbstverständlich kann auch bei dieser Gestaltung des erfindungsgemässen Ventils wiederum mit einem Stopfen gearbeitet werden. Auch hier lassen sich seitlich der Tülle auf den Anschweissrand wiederum Markierungen 17 anbringen, die die entsprechende Druckrichtung für die Oeffnung des Ventiles bezeichnen.
Bildet man an den beiden dichtend aufeinanderliegenden Membrane 3,2,20 mit konzentrisch zur linienförmigen Verbindungsstelle je deckungsgleich einen vollständig umlaufenden Versteifungsring 30 aus, so wird die Wirkung des Ventils mehrfach verbessert. Die beiden Versteifungsringe, welche aussen auf die Membrane angebracht sind, führen zu einer Straffung der Membranflächen und erhöhen die Dichtkraft. Sie führen aber auch zu einer sofortigen Glättung der Dichtmembrane, wenn der aufblasbare Körper unsorgfältig zusammengelegt worden war und somit die Dichtmembrane zerknittert waren. Zusätzlich aber erhöhen sie die Spreizwirkung beim seitlichen Druck, so dass die Luft zur gewünschten Zeit schneller ausströmen kann.
Eine besonders bevorzugte Lösung zeigt schliesslich die Figur 9. Das hier dargestellte Ventil ist wiederum im Schnitt dargestellt, wobei man sich dieses rotationssymmetrisch vorstellen muss. An der Tülle 1 grenzt hier wiederum ein kegelförmiger, flexibler Randbereich 10 an, der in den Anschweissrand 2 übergeht. Dieser ist mit seiner Oberseite an die Unterseite der Folie 5 des aufblasbaren Körpers umlaufend dichtend angeschweisst. Unten an die obere Membran, welche vom Anschweissrand 2 gebildet ist, ist die untere Andrückmembran 3 angeschweisst, welche mit einer topfförmigen Aufnahme 11 versehen ist. Die topfförmige Aufnahme 11 ist in der Lage, Grösse und Form genau gegengleich zum kegelförmigen, flexiblen Wandbereich 10 der oberen Membran geformt.
Direkt angrenzend an den flexiblen Wandbereich 10, beziehungsweise an die topfförmige Aufnahme 11, ist jeweils ein Versteifungsring 30 angeformt. Diese Versteifungsringe haben die vorher beschriebenen Funktionen. Sie sind hier so geformt, dass sie vom äusseren Bereich des Anschweissrandes 2 zum flexiblen Randbereich 10, beziehungsweise vom äusseren Bereich der Andrückmembran 3, zur topfförmigen Aufnahme 11 hin erst langsam in der Dicke zu laufen und dann steil bis auf die ursprüngliche Membrandicke abnehmen. Diese ausgeprägte Knickstelle 31 verbessert den erwünschten Umstülpeffekt in diesem Bereich.
Aber auch der flexible Wandbereich 10 ist mit einer ringförmigen Wandverdickung 32 im oberen Randbereich versehen, der sich bis annähernd an den unteren Rand der Tülle 1 erstreckt und wiederum in eine definierte, ringförmige Knickstelle 33 um die Tülle herum über geht. Eine ähnliche Wandverdickung 34 ist auch an der topfförmigen Aufnahme 11 vorgesehen, welche direkt an der bereits beschriebenen Knickstelle 31 anschliesst. Diese beiden Wandverdickungen 32,34 führen dazu, dass die beiden konischen Ventilteile, nämlich der flexible Wandbereich 10 und die topfförmige Aufnahme in der zusammengestülpten Lage derart dichtend zusammenwirken, dass auch bei einem Herausfallen des Stopfens (hier nicht dargestellt) aus der Tülle 1, das Ventil immer noch dichtend ist. Dies hier gezeigte Ventil kann somit als ein echtes Sicherheitsventil bezeichnet werden. Einerseits wirken die beiden Versteifungsringe 30 an der unteren und oberen Membran 2,3 durch die Anpresskraft des Innen- und Aussendruckes im nicht zusammengestülpten sowie im zusammengestülpten Zustand als aktiv dichtendes Ventil und andererseits wirken die verdickten Wandbereiche 32,34 durch Formschluss im zusammengestülpten Zustand des Ventils als passiv dichtendes Ventil.

Die Versteifungsringe wirken aber auch im Falle eines überhöhten Innendruckes im aufblasbaren Körper. Dann tritt durch die Elastizität der Folie 5 eine erhöhte Zugkraft auf die dichtenden Membranen auf, die ein vollständig glattes Aufeinanderliegen der Folien entgegen wirkt. Die Versteifungsringe vermögen diese Kraft weitgehend aufzunehmen und die Dichtung bleibt erhalten.
Letztlich ist in der Figur 10 noch eine technische Uebergangslösung dargestellt. Während die bisherigen Lösungen, mit Ausnahme der Varianten nach den Figuren 7 und 8, immer ein vollständig nach der neuen Technologie gefertigtes Ventil zeigten, weist die Lösung gemäss Figur 10 eine Variante auf, die durch Umrüstung eines handelsüblichen Ventils mit Tülle erzielt wurde. Hier wird auf das untere Ende der Tülle 1 ein Ventil aufgesteckt und danach festgeschweisst. Der Aufsteckteil 40 besteht wiederum aus einer oberen Membran 42 und einer unteren Membran 43, die entlang ihrer äusseren Peripherie zusammengeschweisst sind und nur eine Luftdurchtrittsöffnung freilassen, die hier, da nicht in der Zeichnungsebene liegend, nicht dargestellt ist. Die obere Membran 42 entspricht in der Ausgestaltungsform jener der Figur 9, wobei jedoch nicht direkt eine Tülle 1 angeformt ist, sondern nur eine Aufnahmeöffnung 41 vorhanden ist, die in der Grösse dem Durchmesser der Tülle 1 angepasst ist, so dass eine klemmende Verbindung beim Aufstecken erreicht wird. Anschliessend lässt sich die obere Membran 41 mit der Tülle 1 verschweissen.
Die untere Membran 43 ist hier wieder als topfförmiges Gebilde ausgestaltet, doch wäre eine flache Membran auch denkbar. Die topfförmige Aufnahme 44 der unteren Membran 43 ist hier als Besonderheit am Boden verdickt ausgeführt. Dieser verdickte Boden bildet so eine Dichtplatte 45, die durch Umstülpung des flexiblen Randbereiches der oberen Membran oder durch Umstülpung der topfförmigen unteren Membran 43 auf das untere, offene Ende der Tülle 1 zu liegen kommt. Der Vorteil einer solchen technischen Uebergangslösung ist insbesondere in den niederen Investitionskosten zu sehen. Dieser Vorteil wird jedoch mit dem Nachteil einer höheren Bauhöhe des Ventils einerseits und einem erhöhten Arbeitsaufwand andererseits erkauft.

## Patentansprüche

1. Automatisch schliessendes Ventil mit einer zylindrischen Aufblastülle (1) mit einem peripher abstehenden Anschweissrand (2) zur Verschweissung mit jener Folie (5) eines aufblasbaren Körpers, der von der Aufblastülle (1) durchsetzt wird, dadurch gekennzeichnet, dass unterhalb der Aufblastülle (1) und mit dieser verbunden, zwei dichtend aufeinanderliegende Membrane (3,2,20) vorgesehen sind, die über eine linienförmige Verbindungsstelle (6,22), welche den unteren Rand der Aufblastülle (1) distanziert umgeben, verbunden sind, wobei die Tülle (1,21) die obere (2,20) der beiden Membrane durchsetzt, und dass die umlaufende Verbindungsstelle (6,22) mindestens eine Luftdurchtrittsöffnung (7) frei lässt, so dass die beiden Membrane je eine die Aufblastülle vollständig umgebende ringförmige Fläche (8) bilden, die unter einem im Innenraum des aufblasbaren Körpers herrschenden Druckes (P_{I}) dichtend aufeinanderliegen.

2. Ventil nach Anspruch 1, dadurch gekennzeichnet, dass die obere der beiden Membrane durch den die Aufblastülle (1) umgebenden Anschweissrandes (2) gebildet ist, und dass die untere Membran eine Andrückmembran (3) ist, wobei auf jene Fläche des Anschweissrandes (2), die im eingeschweissten Zustand des Ventiles zum inneren des aufblasbaren Körpers liegt die Andrückmembran (3) angebracht ist und die linienförmige Verbindungsstelle zwischen Anschweissrand (2) und Andrückmembran (3) angeordnet ist.

3. Ventil nach Anspruch 1, dadurch gekennzeichnet, dass die Fläche des Anschweissrandes (2) grösser als die Fläche der Andrückmembran (3) ist, und dass die Verbindungsstelle (6) mindestens teilweise konzentrisch innerhalb der vollständig umlaufenden Verbindungsstelle (4) zwischen der Folie (5) des aufblasbaren Körpers und des Anschweissrandes (2) liegt.

4. Ventil nach Anspruch 3, dadurch gekennzeichnet, dass die Andrückmembran (3) eine mindestens annähernd U-förmige Grundfläche hat, wobei im Bereich der offenen Ausbuchtung, distanziert von der Tülle, die Luftdurchtrittsöffnung (7) angebracht ist.

5. Ventil nach den Ansprüchen 1 bis 4, dadurch gekennzeichnet, dass die Aufblastülle (1) ein im Bereich oberhalb des Anschweissrandes (2) einen kegelförmigen flexiblen Randbereich (10) aufweist, der in den aufblasbaren Körper stülpbar ist, und dass zentrisch unter der Aufblastülle (1) in der Andrückmembran (39 eine topfförmige Aufnahme (11) angeordnet ist, die so gestaltet ist, dass die Aufblastülle (1) mit dem umgestülpten Randbereich (10) mindestens teilweise darin Platz findet.

6. Ventil nach Anspruch 5, dadurch gekennzeichnet, dass die topfförmige Aufnahme (11) ein separates, in die Andrückmembran (3) eingeschweisstes Kunststoffteil ist.

7. Ventil nach Anspruch 1, dadurch gekennzeichnet, dass an der Tülle (1) ein in diese einsteckbarer Stopfen (13) angeordnet ist.

8. Ventil nach Anspruch 1, dadurch gekennzeichnet, dass die linienförmigen Verbindungsstellen (4,6) Schweissnähte sind.

9. Ventil nach Anspruch 1, dadurch gekennzeichnet, dass die aktive Anpressfläche (8) der Andrückmembran (3) ein Mehrfaches der inneren Querschnittfläche der Aufblastülle (1) beträgt.

10. Ventil nach Anspruch 1, dadurch gekennzeichnet, dass die obere der beiden Membrane (20) eine eigene Tülle (21) aufweist, die in die Aufblastülle (1) des aufblasbaren Körpers formschlüssig hineinpasst, und dass die Tülle (21) mit der Aufblastülle (1) verbunden ist.

11. Ventil nach Anspruch 10, dadurch gekennzeichnet, dass die obere Membran (20) mit der Tülle (21) eine kegelförmige Erweiterung aufweist, welche in einem ebensolchen, flexiblen Randbereich (10) der Aufblastülle (1) Aufnahme findet, und dass die Andrückmembran (3) eine nach oben gerichtete kegelstumpfförmige Erhebung (25) besitzt, die formschlüssig dichtend in die Erweiterung (26) der oberen Membran (20) passt.

12. Ventil nach Anspruch 10, dadurch gekennzeichnet, dass die Tülle (21) der oberen Membran (20) länger als die Aufblastülle (1) ist, und dass der verlängerte zylindrische Teil (23) der Tülle (21) um die Aufblastülle (1) gestülpt ist.

13. Ventil nach Anspruch 1, dadurch gekennzeichnet, dass auf die beiden dichtend aufeinanderliegenden Membrane (3,2,20) konzentrisch zur linienförmigen Verbindungsstelle (6,22) je deckungsgleich ein vollständig umlaufenden Versteifungsring angeordnet ist.

14. Ventil nach Anspruch 5, dadurch gekennzeichnet, dass der kegelförmige, flexible Randbereich (10) eine versteifte, ringförmige Anpressfläche (32) aufweist, welche beidseits oben und unten von einer verdünnten Biegestelle (31,33) umgeben ist, und dass die topfförmige Aufnahme eine ebensolche versteifte, ringförmige Anpressfläche (34) mit beidseitig angrenzenden verdünnten Biegestellen (31) aufweist.

15. Ventil nach Anspruch 1, dadurch gekennzeichnet, dass die dichtenden Membrane (42,43) zu einem seperaten Aufsteckstück (40) verschweisst sind, wobei mindestens die obere Membran einen konischen flexiblen Wandbereich mit einer Aufnahmeöffnung (41) aufweist, wobei diese in der Dimension dem Aussendurchmesser der Tülle (1) angepasst ist und mit dieser verschweissbar ist.

16. Ventil nach einem der Ansprüche 5 oder 14, dadurch gekennzeichnet, dass der Boden der topfförmigen Aufnahme (44) eine verdickte Anpressplatte (45) ist.
